Europäisches Patentamt

(19) European Patent Office

Office européen des brevets

(11) Publication number: **0 217 841**
**B1**

# (12) EUROPEAN PATENT SPECIFICATION

(45) Date of publication of the patent specification:
12.07.89

(21) Application number: 86901868.9

(22) Date of filling: 22.03.86

(86) International application number:
PCT/EP 86/00170

(87) International publication number:
WO 86/05436 (25.09.86 Gazette 86/21)

(51) Int. Cl.⁴: **B 29 C 41/04**, F 16 L 9/12,
**B 29 K 105/12, B 29 K 105/16**

(54) **FIBER REINFORCED PLASTIC PIPE AND CENTRIFUGAL CASTING METHOD FOR MANUFACTURING SAME.**

(30) Priority: 23.03.85 DE 3510625
23.03.85 DE 3510626

(43) Date of publication of application:
15.04.87 Bulletin 87/16

(45) Publication of the grant of the patent:
12.07.89 Bulletin 89/28

(84) Designated Contracting States:
AT BE CH DE FR GB IT LI NL SE

(56) References cited:
FR-A-1 559 949
FR-A-2 198 817
FR-A-2 241 407
US-A-3 150 219
US-A-3 406 724
US-A-3 624 671
US-A-3 768 943
US-A-3 884 269

(73) Proprietor: DOW CHEMICAL GMBH, Poststrasse 1,
D-2160 Stade (DE)

(72) Inventor: MOELLER, Klaus, Zum Rugenberg 228,
D-2161 Hammah (DE)
Inventor: JAEGER, Detlef, Muehlenreihe 18, D-2173
Hemmoor/Basbeck (DE)

(74) Representative: Sternagel, Hans- Günther, Dr.,
Patentanwälte Dr. Michael Hann Dr. H.- G.
Sternagel Sander Aue 30, D-5060 Bergisch
Gladbach 2 (DE)

## Description

The present invention relates to a method for preparing fiber reinforced plastic pipes using the centrifugal casting techniques in a rotating mold and especially to the manufacture of such pipes wherein lugs are in situ formed at the pipe ends.

Pipes of fiber reinforced plastic material particularly glass fiber reinforced plastics such as polyester resins and vinyl ester resins possess excellent chemical resistance such as resistance to attack by acids or other corrosive materials. The pipes having also acceptable physical properties. For this reason fiber reinforced plastic pipes are particularly useful as sewage pipes and in other applications.

In general, fiber reinforced plastic pipes comprise a plastic material such as cured polyester or vinyl ester resin having a reinforcing agent such as chopped glass fibers or continuously wound glass fibers and a filler such as sand distributed as layers or dispersed throughout the continuous matrix of the plastic material. The specific construction of a fiber reinforced plastic pipe, i. e., the distribution of the reinforcing agent and filler through the plastic material and the amounts of each component employed, are dependent on the desired physical and chemical properties required for a specific end use application of the pipe.

The DIN Standard No. 16869 relating to pipes of glass fiber reinforced polyester resin using the centrifugal casting technique describes strength properties of the pipes in response to the pipe diameter as well as the use of predetermined materials and a possible wall structure.

Various different constructions have been proposed to impart the most desired physical and chemical properties to the reinforced plastic pipes.

DE-C-1 675 206 describes a reinforced plastic pipe wherein the amount of the filler material continuously varies, in a radial direction along at least a portion of the wall thickness of the pipe. Alternatively, DE-B-2 726 499 teaches a multilayer reinforced pipe wherein the amount of reinforced glass fiber in a zone extending radially outwardly of a center portion of reinforced resin layers is lower than the amount of glass in a zone extending radially inwardly of the center portion of reinforced layers. The ratio of glass amount of the layers of the outer zone to glass amount of the layers of the inner zone is 3 : 5. The amount of glass within a middle zone is 3 : 5.

There are also a wide variety of methods which are known for preparing glass reinforced plastic pipes. In one method the fiber reinforced plastic pipes are prepared using centrifugal casting techniques by continuously adding the plastic material, generally in a liquid or molten state to a rotating mold and coincident with the continuous addition of the plastic material, sequentially forming the desired layers of the filler and/or reinforcing agent by adding the fiber and/or filler to the mold at desired intervals. Alternatively, the filler and/or the fiber reinforcement can also be added continuously with the plastic resin to prepare a reinforced pipe having either or both the filler and fiber dispersed, with no distinct layer, continuously throughout the pipe wall. During and/or subsequent to the addition of the plastic material, the plastic material is cured or hardened. See, for example, DE-C-1 675 206 and 2 042 073. Unfortunately, air tends to become entrapped in the pipe wall using the described techniques. This entrapped air weakens the pipes since it acts as a point for the initiation and/or propagation of cracks. Moreover, the filler and/or reinforcing agent cannot be accurately distributed with regards to the amount and location throughout the cross-section of the wall.

GB-A-1 549 374 describes a method for preparing a multilayer reinforced plastic pipe which comprises forming layers of the plastic material, fiber reinforcement such as chopped glass fibers and/or filler such as sand by sequentially adding a mixture of polymeric material and chopped glass fibers and/or filler to a rotating mold. The polymer is subsequently cured to form individual reinforced layers. After forming one layer in this manner additional polymers and glass fiber reinforcement and/or filler are added to the rotating mold with the polymer cured thereafter. This step sequence is continued until the desired wall thickness of the pipe is obtained.

In preparing fiber reinforced pipes having continuous fiber layers rather than chopped glass reinforcement, basically, the same techniques are employed except that the desirable times during the pipe preparation, one or more continuous glass strands are wound, normally helically, in the rotating mold. This method for preparing a pipe of three concentric layers is described in US-A-3 406 427. Specifically, this patent teaches the preparation of a relatively flexible sewer pipe of being buried in the ground by initially placing a glass fiber mat in a rotatable mold. While rotating the mold a plastic material containing a hardener is poured or sprayed into the mold to fill the pores in the glass fiber mat. The plastic is then allowed to harden. Subsequently, additional plastic material is then added to the mold followed by the addition of a mixture of a filler and a hardener for the plastic. Once the plastic is hardened, the rotation of the mold is stopped, a second glass fiber mat added to the interior wall and a mixture of plastic and hardener again added to the mold and cured.

Unfortunately, the described sequential layering techniques require a step-wise, semi-continuous or batch operation which require increased costs and time for pipes manufactured as compared to continuous production methods. In addition there is also the problem of layer separation due to the shrinkage of each layer during the curing step.

Also in view of the limited pipe lengths in the manufacture using centrifugal casting techniques, in laying of the said pipes it is imperative for them to be interconnected in firm and reliable manner. Especially in pipe laying using propulsion techniques, lugs are, therefore, provided at the pipe ends via which the connecting sleeves are secured to the pipe ends in abutting relationship. Provided between the outer side of the pipe next to the lug, and the connecting sleeve are, normally, seals, mostly, in additionally formed slots or grooves.

Alternatively, it is taught to provide a pipe end with a relatively flat lug and directly cement thereto the connecting sleeve and firmly or densely shrink same thereon, respectively. The other end of the next pipe to be put into that projecting sleeve then comprises a deeper lug to accommodate sealing material therein.

Conventionally, the said lugs are provided subsequently on the pipe ends by removing a part of the pipe wall. This additional operation substantially increases the costs involved with the pipe manufacture because additional facilities are required.

According to the present invention, a process of preparing fiber reinforced plastic pipes is provided which avoid the disadvantages of the known methods and results in a pipe having improved physical properties.

Furthermore, the present invention provides a process for preparing fiber reinforced plastic pipes in which the desired lugs on the pipe ends are directly formed during the manufacture thereof.

The present invention relates to a centrifugal casting process for preparing fiber reinforced plastic pipes, the wall of which contains reinforcing fibers and particulate fillers, wherein liquid resin, reinforcing fibers and fillers are introduced into a rotating mold, the resin is subsequently cured and the pipe is removed from the mold, characterized in that the entire amount of the resin or at least a substantial part thereof is initially applied to the rotating mold and distributed on its inner surface and refinrocing fibers and/or filler are subsequently distributed within the resin in a desired sequence, wherein the amount of reinforcing fibers and/or filler is varied in axial direction of the pipe during introducing of the reinforcing fibers and/or filler by varying the position of the feeding means in axial direction.

The present invention also relates to said centrifugal casting process wherein, in the preparation of fiber reinforced plastic pipes, a lug having a length of between 40 and 150 mm is formed in situ at both ends on the outer side of the pipe wall using a centrifugal casting mold in the interior of which at both ends thereof are disposed insert rings corresponding in size to that of the lugs and the amount of reinforcing fibers in the pipe wall is increased at both pipe ends in the area of the lugs and in the areas of the wall adjacent to the lugs in longitudinal direction.

The essential of the present invention is characterized by initially applying the liquid plastic which is sometimes defined as resin to a mold. Subsequently filler and/or reinforcing materials are dispersed in the resin prior to curing or hardening. While rotating the mold layers of filler and/or reinforcing material in a desired sequence are formed followed by curing and/or setting the resin having a filler and/or reinforcing material dispersed therethrough. When desired, in the preparation, at both ends of the pipe, on the outer side of the pipe wall, a lug having a length of between 50 and 150 mm is respectively formed, using a centrifugal casting mold on the inner side of which at both ends thereof, are disposed insert rings corresponding in size to the lugs.

The invention also relates to a process wherein, at one or more points throughout the pipe, on the outer side thereof, slots are formed in situ that have a width of between 80 and 300 mm, using a centrifugal casting mold disposed on the inner side of which, at one or several points thereof, are insert rings corresponding in size to the slots.

By the invention fiber reinforced plastic pipes can be prepared in an essentially continuous manner. Specifically, the entire amount or at least a substantial portion of the resin is initially added to the mold and the filler and/or reinforcing agent subsequently dispersed therethrough. Moreover, since the filler and/or reinforcing material are driven through the resin by the centrifugal force created by the rotating mold, entrapment of air during the pipe manufacture is virtually eliminated and the filler and/or reinforcing material are more effectively wetted with the resin. The increased wetting of the fibers and filler with the resin results in a reinforced plastic pipe of increased uniformity. In addition more effective use of the reinforcing agent is achieved. Specifically, pipes of a sufficient strength and desirable physical properties can be prepared by the invention using 6 percent by weight or less of glass fibers as reinforcing material. In another aspect, the present invention is a reinforced plastic pipe containing in relation to the known pipes a lower amount of reinforcing material but having similar strength. Alternatively, pipes prepared by the sequential layering techniques of the prior art require 8 percent by weight or more of glass fiber reinforcement.

The process according to the invention for manufacturing the pipes effects the appearance of the pipes.

These pipes do not have a pure resin layer at the outer surface and have in general at the inner surface a thin layer of pure resin without filler or reinforcing agent. The thickness of this layer depends on the applied amount of reinforcing agent and/or filler and is normally not thicker than 1 mm, preferably not more than 0.5 mm. The structure of the last layer comprising filler and/or reinforcing agent is visible below the pure resin layer on the inner surface. It is also possible to provide a final layer of pure resin by introducing an amount sufficient for such a layer subsequent to the last supply of reinforcing agent and/or filler.

Since the filler and/or reinforcing agent are driven through the liquid resin by the centrifugal force created by the rotating mold, a constrained separation of the materials results with regard to the grain size and weight. This separation occurs in each filling stroke and is visible in a polished section by adequate enlargement.

The amount of reinforcing fibers in the wall is increased at both ends of the pipes from the end of the pipe along 200 to 500 mm, preferably along 150 to 300 mm.

By the method of the present invention, pipes having lengths of between 1 m and 6 m can be prepared, with lengths of between 1 and 3 m being preferred for propulsion pipe application. The pipes have inside diameters of between 15o mm and 3000 mm, depending on the end-use application. The wall thickness is determined by the end-use application and by the static requirements. Standard wall thicknesses are between 15 and 150 mm, preferably between 15 and 120 mm.

The pipes according to the invention are useful in a wide variety of applications including those applications in which fiber reinforced plastic pipes have been conventionally employed heretofore. Due to the excellent chemical resistance exhibited by the reinforced plastic pipes according to the invention, an application of particular interest is the use of fiber reinforced pipes as sewage pipes. These pipes can also be placed by the so-called thrust technology.

The fiber reinforced plastic pipes are prepared using the centrifugal casting technique. The centrifugal casting technique and the required equipment are well-known in the art. In general the centrifugal casting equipment comprises two major components, a rotating mold and a feed system for introducing resin filler and reinforcing material to the rotating mold.

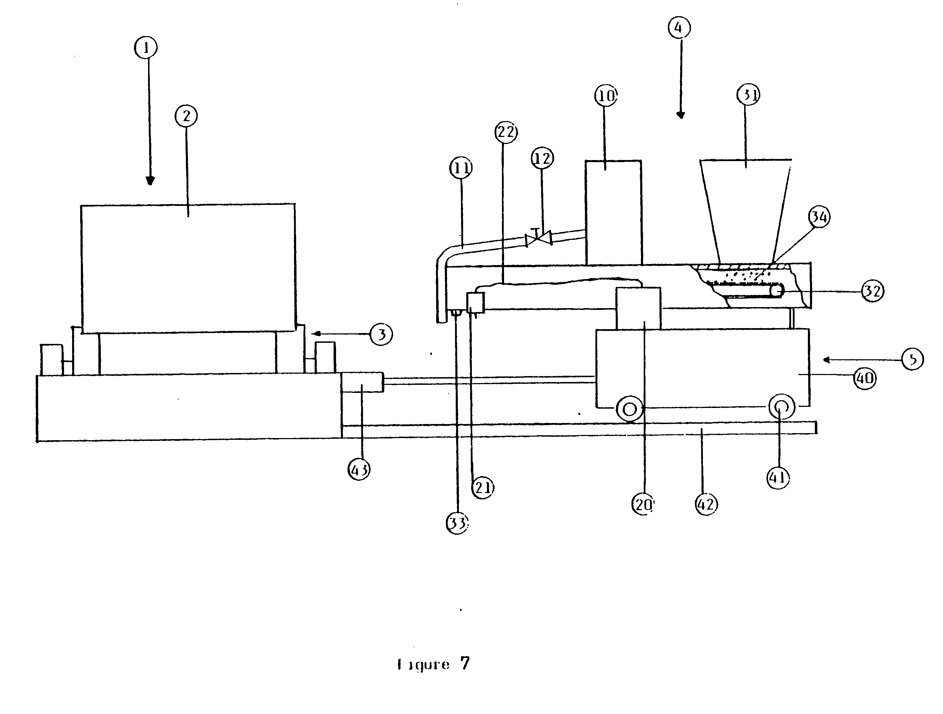

Figure 7 is a schematic representation partially in cross-section of the centrifugal casting equipment which can be employed for the preparation of the pipes according to the invention. The equipment will be facilitated by reference to the figure.

In Figure 7 a rotatable centrifugal casting means 1 is comprised of a cylindrical rotatable mold 2 placed on a drive unit capable of rotating the mold 2. Preferably, the drive unit 3 is capable of operation at varying speeds. The centrifugal casting equipment also comprises a feed system for feeding the plastic material or resin, the reinforcing agent and the filler to the rotatable mold 2.

Specifically, the feed system 4 comprises a resin holding tank 10 and a resin feed line 11 having control valve 12 for feeding the plastic material or resin to the rotatable mold 2. The feed system 4 further comprises a fiber feed arrangement and a filler feed arrangement. The fiber feed arrangement consists of a fiber holding compartment 20 and a fiber chopper 21 which is capable of chopping continuous glass strands 22 into chopped glass fibers of a desired length. The filler feed arrangement consists of a storage container 31 for holding the filler and a conveyor system 32 for conveying the filler through the filler outlet port 33.

In the embodiment illustrated in the accompanying Figure 7, the feed system 4 is mounted in such a manner that it can be transported axially through the rotatable mold during the actual rotation of the mold. In the illustrated embodiment the drive train 5 comprises a cart 40 having wheels 41 placed on a track 42. A linkage 43 connects the movable cart 40 to the frame of the rotatable centrifugal casting means 1 so as to provide the straight line movement of the cart 40 and feed system 4 axially therethrough the mold 2. A variety of other techniques can also be employed to suitably move the feed system 4 through mold 2 and such systems will be readily apparent to the skilled artisan.

In the method of preparing the pipes according to the invention the resin is introduced while rotating the mold. The mold is provided with an end structure to avoid leaking of the resin. Using the equipment illustrated in Figure 7 the desired amounts of resin are added to the mold by moving the feed system 4 via the drive train 5 through the mold 2 while rotating the mold. Thereby the desired amount of resin is applied via resin feed line 11 on to the rotating mold. Preferably. the conditions of resin addition, e. g. the speed at which the feed system 4 is moved through the rotating mold 2, the rate at which the resin is deposited from the feed line and the speed of the mold rotation are controlled to form a liquid or molten plastic cylinder of uniform thickness of the mold surface. Subsequently, the filler depicted as a particulate material 34 in the figure and reinforcing agent depicted as a fiber reinforcement by 22 in the figure are introduced into the liquid or molten resin cylinder formed on the rotating mold. Using the apparatus depicted in the Figure 7, the filler is added to the rotating mold by moving the feed system through the rotating mold while feeding filler from feed opening 33. Similarly, the fiber reinforcing agent 22 is introduced into the resin by feeding a continuous fiber to the fiber chopper 21 and dropping the chopped fiber from the exit of the fiber chopper.

Both the filler and reinforcing agent are added the desired number of times and in a sequence and rate to form a pipe having the desired structure, i. e. layers of fiber and reinforcing agent in a desired sequence and amount throughout the pipe wall. Following each addition of filler and/or reinforcing agent to the resin in the rotating mold, the rotation of the mold forces the added filler and/or reinforcing agent through the resin by means of the centrifugal force created by the rotation of the mold 2. After the introduction of the reinforcing agent and filler to the rotating mold 2, the resin is subsequently fully set and/or cured.

Although any of a variety of methods can be employed to cure and/or set the plastic material, the plastic is preferably set or cured in the mold until some shrinkage takes place, and the pipe pulls away from the mold 2. The pipe is then removed from the mold 2. If desired, the plastic material can subsequently be postcured. Following complete cure or setting, the centrifugal cast pipe can be employed without further machining.

Although such pipes are generally corrosive resistant throughout it is sometimes desirable, particularly if the reinforced plastic pipe is to be employed in a corrosive environment or an environment containing an abrasive, particularly material such as sand or dirt, e. g. sewer applications, to prepare the pipe such that the interior surface, most advantageously the interior surface of the pipe, is coated with a thin layer which consists essentially of the plastic resin only. This interior pipe surface can be so coated by employing an excess amount of plastic resin initially fed to the rotating mold 2. Alternatively, the interior resin coating can be prepared by adding either prior to or after curing of the resin an additional amount of the same or different type of plastic resin to the interior of the pipe. The interior resinous layer provides increased resistance to chemical attack by the material to be carried by the pipe.

When pipes having lugs or slots are desired, the pipe wall thickness, at the lugs or slots, is reduced by an amount of between one fifth and one third. By the process of the invention, it is possible to prepare pipes which, at the ends thereof are provided with lugs and, in the longitudinal direction, include slots. Dividing a pipe of extended length respectively in the center portion of the slots will result in the formation of shorter pipes provided with lugs at both ends.

4

Preferably, lugs of different depth are formed at the two pipe ends.

To produce shorter-length pipes, advantageously, a centrifugal casting mold of the two-fold length is employed to form, at both pipe ends, lugs of identical depth and, midway of the pipe length a slot deeper or flatter than the lugs at the pipe ends. Dividing said pipe will result in two pipes of shorter length.

To prepare such lugs and slots, insert rings are disposed at the inner side of the centrifugal casting mold, the width of which rings corresponds to the length of the desired lugs and to the width of the slots, respectively. The thickness of the insert rings corresponds to the depth of the lugs and slots, respectively. Preferably, the sides of the insert rings taper toward the axis of the centrifugal casting mold. The rings located at the ends of the centrifugal casting mold do not taper at the side facing the mold edge. The insert rings can be made of the same material as the centrifugal casting mold although any other material can be readily employed. It is essential that the materials per se or by a corresponding surface treatment, can be separated from the cured resin with no damage to the surface.

Generally, the centrifugal force of the centrifugal casting mold is sufficient to so firmly force the insert rings against the inner surface of the mold as to preclude lateral displacement toward the longitudinal axis of the mold. However, alternatively, the insert rings can be mechanically locked against lateral displacement, for example, by way of pins or screws extending through the wall of the centrifugal casting mold down to the insert rings. To remove the cured plastic pipe from the centrifugal casting mold, the afore-mentioned mechanical locks will be withdrawn.

In order to be able to remove, after withdrawal of the plastic pipe from the centrifugal casting mold, the insert rings at the same time discharged from the slots of the plastic pipe, such insert rings are composed of a variety of detachable segments.

Most preferably, not only lugs are formed at the ends of the pipes, but at the same time, slots are formed in situ throughout the pipe. The width of said slots, preferably is selected to amount to the two-fold of the length of the desired lugs, thereby permitting, in a centrifugal casting mold of extended length, to produce simultaneously and in one operation, a plurality of short-length pipes in that the long-length pipe is subsequently separated at the slots.

Employing insert rings at the ends of the centrifugal casting mold and, optionally, further insert rings of equal thickness, in the longitudinal direction, one or more pipes having identically configured ends will be formed. However, frequently it is desired to form the pipe ends with lugs of different depth. In such instances, insert rings of different thickness are disposed in the centrifugal casting mold.

By the method of the invention, in this form of embodiment, lugs of different depth are formed in situ at both ends.

If it is desired to prepare in a centrifugal casting mold of extended length, simultaneously a plurality of short-length pipes of different end configuration, the arrangement of the insert rings can widely vary, depending on the number of slots provided.

A slot deeper or flatter than the lugs at the pipe ends can be formed at both ends of the pipe lugs of the same depth, and midway of the pipe length. To achieve this effect, a centrifugal casting mold is employed at the two ends of which are located insert rings of equal thickness, and midway of which an insert ring is provided which is thicker or thinner than the insert rings at the pipe ends of the mold. If the pipe removed from the centrifugal casting mold is divided into two pipes, two pipes having lugs of different depth are formed at the ends, which is due to the slot depth differing from the depth of the lugs at the two pipe ends.

Alternatively, lugs of different depth are provided at the pipe ends and slots are formed at two or more points throughout the pipe the depth of which is greater or smaller than the depth of the lug of closest coming pipe end, and a flat slot, in the longitudinal direction, is followed by a deep slot or a deep slot is followed by a flat slot, with the depth of each flat slot corresponding to the depth of the flatter lug at the pipe end and the depth of each deep slot corresponding to the depth of the deeper lug at the pipe end and respectively all deep slots and lugs and respectively all flat slots and lugs corresponding in depth.

The provision of three slots results in three pipes while the provision of four slots results in five pipes of shorter length with a lug of respectively different depth. To achieve this effect, insert rings of different thickness are alternatingly disposed in the centrifugal casting mold, starting from one pipe end. The insert rings serving to form the slots have the two-fold width of the insert rings disposed at the two ends of the cylindrical centrifugal casting mold.

Another form of embodiment of the method of the invention resides in that lugs of the same depth are formed on the pipe ends of a pipe of extended length, and slots are formed at three or six points throughout the pipe, the depth of which is greater or smaller than the depth of the lugs at the pipe ends, and that the depth of the slots adjacent the pipe ends differs from the depth of the lugs at the pipe ends and that a flat slot, in the longitudinal direction, is followed by a deep slot or a deep slot is followed by a flat slot, with the depth of each flat slot corresponding to the depth of a flat lug at the pipe end or the depth of each deep slot corresponding to the depth of a deep lug at the pipe end, and respectively all deep slots and lugs and respectively all flat slots and lugs corresponding in depth. Providing three slots will make four shorter-length pipes out of one long-length pipe; providing six slots will result in seven shorter-length pipes having lugs of a respectively different depth configuration. Also in that instance, in the preparation of the slots, insert rings are advantageously employed that are of the two-fold width of the insert rings located at the ends of the centrifugal casting mold.

The reduced strength of the wall in the area of the lugs at the pipe ends, which is due to a decreased wall thickness, in the practice of the invention, can be offset by increasing the amount of reinforcing fiber in the pipe wall at the two pipe ends in the area of the lugs and, optionally, in the preparation of a long-length pipe having slots, in the area of the slots and in the regions of the wall adjacent the lugs and slots in the longitudinal direction. To achieve this effect, during adding reinforcing fiber and/or filler to the centrifugal casting mold, additional reinforcing fiber is applied the corresponding regions longitudinally of the mold. Owing to the fact that the said additional amount is respectively provided to extend down to the area of the full wall strength, especially the transitory zone from the thin pipe wall to the thick pipe wall is of a particularly strong and stable configuration. Special importance is attached thereto if the pipes of the invention are laid using the so-called propulsion technique.

In preparing fiber-reinforced pipes having continuous fibers rather than reinforcing chopped fibers, basically, the same centrifugal casting techniques are employed except that, at a predetermined time during the pipe preparation, one or more continuous glass fiber strands are disposed, normally helically, in the rotating mold.

In all these instances, the method of the invention can be employed to thereby permit, during the pipe preparation. to provide in situ the lugs at the pipe ends by locating corresponding insert rings in the centrifugal casting mold.

According to a preferred form of embodiment, the entire amount of the plastic material or at least a substantial part thereof is initially placed into the mold and filler and/or reinforcing agent is subsequently dispersed therein. As the filler and/or reinforcing agent in this way of operation, due to the centrifugal force of the rotating mold, are forced through the liquid resin, entrappment of air is virtually eliminated and the filler and/or reinforcing agent are effectively wetted with the resin. In addition, more effective use of the reinforcing agent is achieved. Pipes of a sufficient strength and the desirable properties can be prepared with this step sequence, using 6 percent by weight or less of glass fibers as a reinforcing agent. In the event that fiber reinforcements or fillers or mixtures are employed rather than the total amount of plastic material, 8 percent by weight or more of the amount of glass fiber reinforcement are usually required.

In the event that the major part of the resin or the total amount thereof is initially introduced into the centrifugal casting mold, provisions will be required to preclude discharge of the liquid resin from the centrifugal casting mold at the ends thereof. If the reinforcing agents and/or fillers are forced through the resin due to the centrifugal force, a certain separation of the materials by grain size and weight will take place of necessity. This separation will occur with each loading stroke and is revealed by the micrograph of correspondingly enlarged scale.

In the practice of the invention, especially if the liquid resin is first added to the centrifugal casting mold and the filler and reinforcing agent are then added, the charging unit, during loading respectively in the direction of the longitudinal axis of the centrifugal casting mold, is moved therethrough.

In the first loading stroke or the first group of several loading strokes, initially, the zones of the mold between the insert rings are so filled that the filling level of the thickness of the lowest insert rings is reached.

The second loading stroke or second group of loading strokes will fill again all zones between the rings, with the zones of the thinner rings being equally filled until the layer thickness has reached the thickness of the thicker rings. In this loading stroke or group of loading strokes, in the area of the rings of lower thickness and in the neighboring areas, additional amounts of reinforcing fiber are already added.

Subsequently, the third stroke or third group of strokes takes place throughout the mold length, with an additional amount of fiber reinforcement being provided in the zones of the thicker rings and the neighborhood thereof.

The speed of revolution of the centrifugal casting mold, between the individual strokes or groups of strokes, temporarily is increased for respectively compressing the materials.

If a pre-mixed composition of liquid resin, fiber reinforcement and filler is applied to the rotating mold, by a corresponding length of the loading strokes, first the zone between the insert rings is filled and only in subsequent loading strokes extending throughout the length of the mold, the insert ring area is also filled. If fiber and/or filler is added to the mold, it is advantageous to first load the zones between the insert rings and then add the liquid resin and, optionally, additional filler to these areas until the loading thickness has reached the thickness of the lowest insert rings. Thereafter, all parts of the mold, inclusive of the insert ring areas, will be loaded, it being possible to load only the areas between the thicker insert rings inclusive of thinner insert rings, before loading throughout the mold length takes place.

When fiber mats and/or continuous fibers are employed, it is advantageous to thereby reinforce, in any case, areas of the insert rings and zones in the vicinity thereof.

With regard to the individual components of the pipe, the plastic resin employed in preparing the pipe can suitably be any thermo-settable plastic which possesses the chemical and physical properties required for reinforced plastic pipes being prepared. In general the resin is advantageously a vinyl ester resin, an unsaturated polyester resin, or a compatible mixture thereof. Both vinyl ester resins and unsaturated polyester resins are well-known in the art. Useful are also epoxy resins or polyester amide resins.

Vinyl ester resins advantageously employed herein are those compounds prepared by reacting an epoxy compound, which can be either monomeric or polymeric having one or more oxiranyl group in the molecule with an ethylencially unsaturated carboxylic acid. The epoxy compounds may be saturated or unsaturated aliphatic, alicyclic or aromatic hydrocarbons, inertly substituted aliphatic, alicyclic or aromatic hydrocarbons or combinations thereof.

Representative epoxy compounds useful in preparing a vinyl ester include the polyglycidyl ethers of polyhydric alcohols or polyhydric phenols, epoxidized novolacs, epoxidized fatty acids or drying oil acids as well as epoxidized unsaturated polyesters. Rubber-modified epoxy components such as the reaction product of one or more polyepoxide with a carboxy terminated butadiene/acrylonitrile can also be employed as the epoxy component. Preferably, the epoxy component contains at least 1, more preferably at least 1.1, oxiranyl group per molecule. Preferred epoxy compounds are the polyglycidyl ethers of polyhydric alcohols or polyhydric phenols or combinations of these epoxides with each other or with one or more other epoxy compounds. A preferred polyepoxide is the diglycidyl ether of 2,2-bis(4-hydroxy phenol) propane.

Carboxylic acids used to esterify the epoxy compound can be aliphatic, alicyclic or aromatic ethylenically unsaturated carboxylic acids. The acid can be either a mono or dicarboxylic acid. Representative unsaturated monocarboxylic acids include acrylic acid and methacrylic acid and their halogenated derivates, cinnamic acid, crotonic acid and $\alpha$-phenylacrylic acid and mixtures thereof and hydroxyalkyl acrylate or methacrylate half-esters of dicarboxylic acids when the hydroxylalkyl group preferably has from 2 to 6 carbon atoms. The preferred acids are acrylic or methacrylic acid.

The vinyl ester will vary from liquid to solid and will generally possess free hydroxy, ethylenic and epoxide groups. Some or all of the pendant hydroxy groups on the vinyl ester resins may, if desired, be reacted with an acid anhydride, preferably a polycarboxylic acid anhydride such as maleic anhydride.

Process for the esterification of the epoxy compounds with the unsaturated carboxylic acid to form a vinyl ester are well-known in the art, e. g. from US-A-3 377 406; 3 420 914; 3 367 922 and 3 301 743.

Unsaturated polyesters are normally the reaction product by either the so-called diffusion or solvent process, of a saturated and/or an unsaturated poly(including di-) carboxylic acid and/or an anhydride of a polycarboxylic acid which is polyesterified with an esterifying agent such as a polyhydric alcohol or alkalene oxide. Representative polycarboxylic acids and anhydrides thereof include maleic acid, maleic anhydride, crotonic acid, itaconic acid and itaconic anhydride, and ortho-, iso, or terephthalic acid. Esterifying agents include polyhydric compounds such as polyhydric alcohols, phenols, and glycols and alkalene oxides as well as mixtures and adducts thereof. Preferred esterifying agents are glycerol, bisphenol A and its alkylene oxide adducts such as propoxylated bisphenol A, pentaerythritol, ethylene glycol and propylene glycol.

The vinyl ester resin or unsaturated polyester resin is generally employed in combination with a copolymerizable monomer which is typically an ethylenically unsaturated compound. The copolymerizable monomers advantageously employed include the monovinylidene aromatic compounds such as styrene, vinyl toluene, halogenated styrenes and vinyl naphthalene; the polyvinylidene aromatics such as divinyl benzene, saturated alcohol esters such as methyl or octyl alcohol esters of acrylic or methacrylic acid, vinyl acetate, diallyl maleate and mixtures of one or more of said monomers. The preferred monomers are monovinylidene aromatic compounds, with styrene being the most preferred.

In general, the vinyl ester resin will comprise from 30 to 70 weight percent of the copolymerizable monomer, preferably styrene, said weight percent being based on the total weight of the vinyl ester resin, including the copolymerizable monomer. Alternatively, an unsaturated polyester resin will generally contain from 30 to 60 weight percent of the copolymerizable monomer, preferably styrene, based on the total weight of the unsaturated polyester resin, including the copolymerizable monomer.

To cure the polyester or vinylester resin, the resin will generally contain curing agents, accelerators and/or free-radical initiators. Alternatively, UV light can be employed to affect cure. Curing agents, accelerators and/or initiators are well-known in the art. In general, the accelerator, curing agent and/or free radical initiator required to cure or set the resin are mixed with the resin prior to its addition to the rotating mold. Alternatively, the curing agent, accelerator and/or free-radical initiator necessary to cure the resin can be added after the resin has been added to the rotating mold but prior to the addition of any filler or reinforcing agent.

The curing agent, accelerator and/or free-radical initiator are selected such that the resin does not cure and/or set to a sufficiently solid material prior to the complete addition of the filler and the reinforcing agent. In general, the resin curing system, e. g. the curing agent, accelerator and free-radical initiator are selected such that the resin will remain sufficiently liquid to allow the distribution of the filler and/or reinforcing agent prior to the curing and/or setting of the resin. Shorter cure times are recommended in producing of pipes of smaller diameters whereas more time prior to hardening or curing is required for producing pipes of larger diameter. A processing period of at least 10 minutes is generally required. The process time will advantageously vary from 20 to 170, more preferably from 30 to 90 minutes, and the resin curing system is selected accordingly. It is necessary to introduce the complete amounts of reinforcing agent and filler to the resin material during this time.

The curing system that will allow the required processing time can easily be determined by the skilled artisan using simple experimental techniques. A particularly preferred curing system for curing vinylester or polyester resins comprises from 0.1 to 5, preferably from 0.5 to 3 weight percent of free-radical releasing initiator, preferably a peroxide initiator and an accelerator such as a secondary amine or cobalt naphthanate. The secondary amine, e. g. dimethyl amine, is advantageously employed in an amount of up to 1 weight percent perferably 0.02 to 0.5 weight percent. When using cobalt naphthanate, from 0.2 to 10, preferably from 0.5 to 8 weight percent of cobalt naphthanate, are advantageously employed. The weight percents are based on the total weight of the resin, including any copolymerizable monomers.

In addition, the reinforcing agent and/or filler, preferably the reinforcing agent may also comprise a wetting

7

agent such as silane sizing agent or an epoxy or polyester powder to facilitate the wetting of the reinforcing agent and/or filler with the resin material during pipe production.

The filler used in preparing the fiber reinforced plastic pipe can be a particulate material such as sand. Particulate polymer materials or other organic and/or inorganic particulate filler can be used. The preferred particulate material is sand. when sand is used as particulate material it will typically have particle sizes ranging from 0.001 to 5 mm. More typically the particulate material will possess a particle size ranging of from 0.02 to 2 mm. The most preferred filler for use in preparing the reinforced plastic pipe is washed, dried sand having a particle size ranging from 0.02 to 1.55 mm.

Materials advantageously employed as the reinforcing agents in preparing the reinforced plastic pipes include steel fibers, full-aromatic polyamides (aramid), high-strength polyethylene, nylon and minerals such as carbon fibers, mica and glass.

The preferred reinforcing agent is glass. Although the reinforcing agent can be employed as fibers, fabrics or continuous strands which are applied on to the mold, chopped fibers are most advantageously employed in the preparation of the reinforced plastic pipes. Alternatively, it is possible to use the reinforcing material or a portion thereof in the form of a powder, spherical bead or granules.

The preferred reinforcing agent is a chopped glass fiber having a diameter of from 1 to 100 μm, preferably from 5 to 50 μm and a length from 1 to 300 mm, preferably from 5 to 200 mm. More preferably the chopped glass fibers have a length of from 10 to 100 mm, most preferably a length from 25 to 90 mm and a diameter from 5 to 20 μm.

The amounts of the resin, reinforcing agent and filler employed in preparing the reinforced plastic pipes and the distribution of the reinforcing agent and filler throughout the plastic resin are dependent on a variety of factors including the specific filler, reinforcing agent and resin employed, the end use application of the pipe and the physical and chemical properties desired for the specific end use. In general, the reinforced plastic pipes according to the present invention will comprise from 10 to 30 weight percent of the plastic resin (including the styrene and other agents such as the cure initiator and/or accelerator), from 1 to 16 weight percent of the reinforcing agent and from 65 to 85 percent of the filler. Preferably the reinforced plastic pipe will comprise from 14 to 28, more preferably from 16 to 23 weight percent of the resin; from 1 to 10, more preferably from 2 to 6 weight percent of the reinforcing agent; and from 70 to 85, more preferably from 71 to 82 weight percent of the filler; said weight percent being based on the total amount of resin, filler and reinforcing agent employed. A most preferred fiber reinforced plastic pipe comprises from 16 to 23 weight percent of a vinylester resin, from 2 to 5 weight percent of chopped glass fiber and from 71 to 82 weight percent sand; said weight percents being based on the total amount of vinylester resin, chopped glass fiber and sand employed for the fiber reinforced plastic pipe.

The distribution of the reinforcing agent and filler throughout the pipe is dependent on the variety of factors including the desired properties of the pipe, size of the pipe and the desired wall thickness and the specific reinforcing agent, filler and resin employed. In general the reinforcing agent is deposed towards the inner and outer regions of the pipe wall and are separated by a relatively thick layer in the center portion. The thick layer of the center portion of the pipe wall is a mixture of the filler and resin. Although, the distribution of the reinforcing agent in the outer and inner regions can vary widely, from 20 to 70, preferably from 30 to 60 weight percent of the reinforcing agent is located in the outer region, i.e. the region extending radially outwardly from the central wall axis, and from 30 to 80, more preferably from 40 to 70, weight percent of the reinforcing agent is located in the inner region, i. e. the inner area extending radially inwardly from the central wall axis. For maximum pipe strength the inner area in respect to the total amount of the reinforcing agents contains an equivalent or greater, preferably a greater, percentage of the reinforcing agent, but this is not necessarily required to produce a pipe of sufficient strength.

In the practice of the present invention the speed of rotation of the mold is dependent on a variety of factors, particularly the viscosity of the resin employed, the ability of the resin to wet the reinforcing agent and filler and the size of the pipe to be prepared. In general, the speed of rotation is sufficient to allow the reinforcing agent and filler to be driven through the resin and to strip all air bubbles from the pipe during introduction of the reinforcing agent and/or filler to the resin. In general, as the size of the pipe increases the speed of rotation can be decreased. In addition, as the viscosity of the resin decreases the speed of rotation required can also generally be decreased. In addition to allow sufficient wetting of the reinforcing agent and filler, the speed of rotation can be varied throughout the preparation of the pipe. In general, the speed of rotation is such that the centrifugal force is sufficient to strip all gas and air bubbles from the pipe during the introduction of the reinforcing agent and/or filler to the resin.

After introducing the required amounts of reinforcing agent and filler to the resin, the resin is cured and/or set. Conditions most advantageously employed in curing and/or setting the resin are dependent on a variety of factors including the particular resin employed. When employing the preferred vinylester and polyester resins, the curing reaction is exothermic and curing conditions are maintained such that the peak temperature during cure is 120°C or less. This peak temperature will vary depending on the amounts of cure agent and/or accelerator employed and the amounts of filler and/or reinforcing agent contained by the pipe. The peak temperature is preferably from 60° to 80°C and remains under 100°C.

One method which can advantageously be employed in curing and/or setting the resin comprises initially heating the resin by blowing hot air on to the uncured composite of the resin/filler/reinforcing agent and after at least partially curing the resin removing the pipe from the mold. The removal is facilitated by shrinkage of the resin during cure. Subsequently, the at least partially cured pipe is placed into an oven for post-treatment at elevated temperatures. Following the cure the resulting fiber reinforced plastic pipe can be employed without additional machining or finishing.

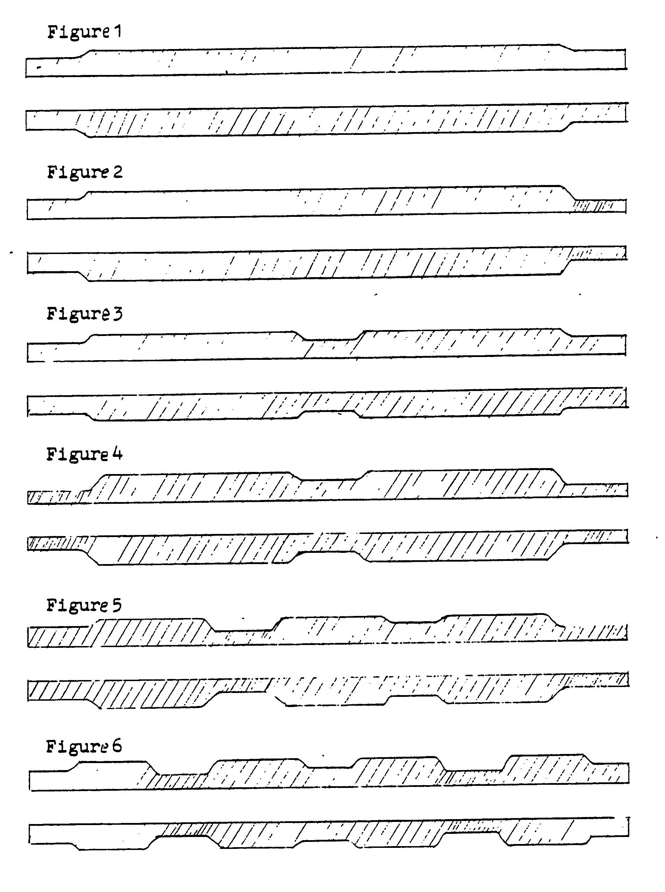

Figures 1 to 6 show, in longitudinal section, different forms of embodiment of the pipe ends and slots throughout the pipe, in accordance with the present invention.

Figure 1 shows a pipe having lugs at both ends that are of equal depth.

Figure 2 shows a pipe comprising a flatter lug at the lefthand and a deeper lug at the righthand pipe end.

Figure 3 shownns a pipe comprising lugs of equal depth at both pipe ends and a slot of the same depth in the center portion of the pipe. If the pipe is bisected at the center portion, two pipes of shorter length having identically formed pipe ends arise.

Figure 4 shows a pipe having identically formed pipe ends and a slot of different depth located in the center portion of the pipe, which, in this instance, is a flatter slot. Bisecting said pipe results in two pipes of shorter length having lugs at the end of the pipe of respectively different depth.

Figure 5 shows a pipe comprising lugs at the pipe ends of different depth, and slots of different depth respectively disposed at one-third of the pipe length. In the event that the one pipe end has a flat lug, the first slot will be of a deeper and the subsequent slot of a flatter configuration and the second pipe end will have a deeper lug. In bisecting the pipe in the slots, hence, three shorter-length pipes having lugs at the pipe ends of different depth will arise.

Figure 6 shows a pipe comprising lugs of equal depth at both ends and a slot in the center portion of the pipe being of the same depth as the lugs at the pipe ends and, at one-fourth and three-fourth of the pipe length, respectively one slot of greater depth.

By dividing said pipe at the slots, the resultant four pipes have lugs of different depth at the respective ends.

Depending on the desired pipe length and the available length of the centrifugal casting mold it will be possible to prepare by the method of the invention simultaneously one or several spigot pipes having pipe ends of an identical or different configuration. For a different configuration of the pipe ends it will be necessary for the thickness of the insert rings disposed in the centrifugal casting mold to respectively vary, i.e., a thinner insert ring is respectively combined with one of greater thickness and, in the provision of more than two insert rings, the next insert ring is respectively of a different thickness. As a rule, it will be sufficient to operate on insert rings of two different thicknesses in a given diameter of the centrifugal casting mold.

The following examples are set forth to illustrate the practice of the present invention. In the examples all parts and percentages are by weight unless otherwise indicated.

## Example 1

Using centrifugal casting equipment such as illustrated in Figure 7, a reinforced plastic pipe having a length of 1.26 m and an outer diameter of 900 mm was prepared. In the preparation of the reinforced plastic pipe 56 parts of vinylester resin was added to the mold while it was being rotated at 200 rpm (revolutions per minute). Thereafter, 23.2 parts of sand were introduced into the rotating mold containing the resin. The speed of rotation was maintained at 200 rpm. The sand was forced through the resin to the outer portion of the pipe.

Subsequently, 0.9 parts of chopped glass fibers having an average length of 50 mm were introduced into the resin. Thereafter 11.6 parts of sand were again introduced into the resin. After complete addition of the sand the speed or rotation of the mold was increased to 450 rpm to compact the rotating composite. In operation the sand assists in driving the glass fibers through the resin to the outer portion of the pipe.

Additional amounts of glass and sand were added in various stages to prepare a pipe comprising 45 parts glass, 56 parts of vinylestet resin and 209.4 parts of sand. This corresponds to a pipe comprising 1.7 percent glass, 20.7 percent resin and 77.6 percent sand within the wall of the pipe. During each addition of sand and glass the speed of rotation of the mold was maintained at 200 rpm and was periodically increased to 450 rpm for purposes of compaction. of the glass, 40 percent (1.8 parts) was in the outer region of the pipe and 60 percent (2.7 parts) in the inner region of the wall of the pipe. The center portion consisted of a resin and sand mixture of 250.6 parts sand and divided the outer and inner regions containing the glass reinforcement.

After the addition of the entire amount of glass and sand which took 60 minutes, the resulting glass/sand/resin composite was heated for a period of 15 minutes to cure the resin. Curing was conducted at conditions to give a peak temperature of 80°C. The resulting fiber reinforced plastic pipe was removed from the mold. It was found to have a smooth outer surface, excellent chemical resistance and physical properties.

## Example 2

To prepare a pipe having an outer diameter of 600 mm which comprises at the ends thereof both reinforced sections, the feed system during introduction of the filler and reinforcing fibers was respectively moved over varying distances into the centrifugal casting mold. A distinction is made between long-stroke in which additional material is added to the area at each end of the mold.

A vinylester resin was used as resin.

The grain distribution of sand, as employed, was as follows: 50 percent by weight from 0.5 to 1.2 mm, 20 percent by weight from 0.125 to 0.5 mm and 30 percent by weight from 0.06 to 0.2 mm.

Generally the pipe wall consists of 19.3 percent by weight of resin, 70 percent by weight of sand and 3.7 percent by weight of chopped glass fibers.

The sequence during addition of the components was: 61 parts of resin were added to the centrifugal casting mold at a speed of between 260 and 300 rpm.

| Stroke Sequence | Stroke Length | Parts by Weight Per Stroke | Revolutions Per minute |
|---|---|---|---|
| 6 x sand | Long-Stroke | 6.2 | 260 to 300 |
| 2 x glass | Long-Stroke | 1.05 | 260 to 300 |
| 1 x glass | Short-Stroke at both mold ends | 0.35 | 260 to 300 |
| Compression | | | 620 |
| 6 x sand | Long-Stroke | 6.2 | 260 to 300 |
| 2 x glass | Long-Stroke | 1.05 | 260 to 300 |
| 1 x glass | Short-Stroke at both mold ends | 0.35 | 260 to 300 |
| Compression | | | 620 |
| 24 x sand | Long-Stroke | 6.2 | 260 to 300 |
| 2 x glass | Long-Stroke | 1.05 | 260 to 300 |
| 1 x glass | Short-Stroke at both mold ends | 0.35 | 260 to 300 |
| Compression | | | 620 |
| 1 x sand | Long-Stroke | 6.2 | 260 to 300 |
| 2 x glass | Long-Stroke | 1.05 | 260 to 300 |
| 1 x glass | Short-Stroke at both mold ends | 0.35 | 260 to 300 |
| Compression | | | 620 |
| 1 x sand | Long-Stroke | 6.2 | 260 to 300 |
| 2 x sand | Long-Stroke | 1.05 | 260 to 300 |
| Compression | | | 620 |
| 1 x sand | Long-Stroke | 6.2 | 260 to 300 |
| 1 x sand | Long-Stroke | 6.2 | 260 to 300 |
| Compression | | | 620 |

While the mold was rotated at 400 rpm (revolutions per minute) the curing conditions substantially corresponded with those in Example 1.

A pipe produced in such a manner has over a length of 500 mm at its ends particularly high strength due to the increased glass amount.

## Example 3

To prepare a pipe having an outer diameter of 600 mm which comprises at the ends thereof both reinforced sections and lugs of different depth, an insert ring having a width of 64 mm each is disposed in the centrifugal casting mold at both ends thereof. One of said insert rings is 4.5 mm thick while the other of said insert rings is 8 mm thick. The cylindrical casting mold has a length of 2980 mm.

In a first loading stroke, at 260 to 300 rpm first 61 parts of resin were introduced into the centrifugal casting mold.

Thereafter, the charing apparatus, during introduction of the filler and the reinforcing fibers was respectively moved a distance of different length in the centrifugal casting mold. A distinction is made between long-stroke in which material is added throughout the available pipe length and short-stroke in which the material is added only to the area between the insert rings and wherein no additional substances are added to the region of the insert rings. A three-quarter stroke is one wherein the mold end with the thicker insert ring remains clear of additionally added material. For reinforcing the sections at both pipe ends, in specific strokes, glass is additionally added to the two mold ends in the region of the insert rings and, moreover, to the neighboring wall area.

The grain distribution of the sand as employed is as follows: 50 percent by weight from 0.5 to 1.2 mm; 20 percent by weight from 0.125 to 0.5 mm; and 30 percent by weight from 0.06 to 0.2 mm.

Generally, the pipe wall comprises 19.3 percent by weight of plastic resin; 77 percent by weight of sand and 3.7 percent by weight of chopped glass fibers.

After the addition of the entire amounts of glass and sand, which was completed after about 60 minutes, the resultant glass/sand/resin composite was heated for a period of 15 minutes to cure the resin. Curing was conducted at conditions to give a peak temperature of 80°C. The resultant fiber reinforced plastic pipe was then removed from the mold. It was found to have a smooth outer surface and, at the two pipe ends, lugs of respectively different depth. In the end regions, along a length of respectively about 500 mm, there was a particularly high strength due to an elevated amount of glass in that region.

First, 61 parts of resin were added to the centrifugal casting mold at a speed of between 260 and 300 revolutions per minute.

| Stroke Sequence | Stroke Length | Parts by Weight Per Stroke | Revolutions Per Minute |
|---|---|---|---|
| 5 x sand | Short-Stroke | 6.2 | 260 to 300 |
| 1 x sand | Long-Stroke | 6.2 | 260 to 300 |
| 2 x glass | Long-Stroke | 1.05 | 260 to 300 |
| 1 x glass | at both mold ends | 0.35 | |
| | | | |
| Compression | | | 620 |
| 5 x sand | Short-Stroke | 6.2 | 260 to 300 |
| 1 x sand | Long-Stroke | 6.2 | 260 to 300 |
| 2 x glass | Long-Stroke | 1.05 | 260 to 300 |
| 1 x glass | at the mold ends | 0.35 | 260 to 300 |
| | | | |
| Compression | | | 620 |
| 7 x sand | Three-Quarter Stroke | 6.2 | 260 to 300 |
| 17 x sand | Long-Stroke | 6.2 | 260 to 300 |
| 2 x sand | Long-Stroke | 1.05 | 260 to 300 |
| 1 x sand | and the mold ends | 0.35 | 260 to 300 |
| | | | |
| Compcession | | | 620 |
| 1 x sand | Long-Stroke | 6.2 | 260 to 300 |
| 2 x glass | Long-Stroke | 1.05 | 260 to 300 |
| 1 x glass | at the mold ends | 0.35 | 260 co 300 |
| | | | |
| Compression | | | 620 |
| 1 x sand | Long-Stroke | 6.2 | 260 to 300 |
| 2 x glass | Long-Stroke | 1.05 | 260 to 300 |
| | | | |
| Compression | | | 620 |
| 1 x sand | Long-Stroke | 6.2 | 260 to 300 |
| 1 x sand | Long-Stroke | 6.2 | 260 to 300 |
| Compression | | | 620 |

During curing, the mold was rotated at 400 revolutions per minute. The curing conditions substantially correspond to those already described.

The so-prepared pipe, at the ends thereof, exhibits a particularly high strength due to the increased glass amount.

## Claims

1. A centrifugal casting method for preparing fiber reinforced plastic pipes, the wall of which contains reinforcing fibers and particulate fillers, wherein liquid resin, reinforcing fibers and fillers are introduced into a rotating mold, the resin is subsequently cured and the pipe is removed from the mold, characterized in that the entire amount of the resin or at least a substantial part thereof is initially applied to the rotating mold and distributed on its inner surface and reinforcing fibers and/or filler are subsequently distributed within the resin in a desired sequence, wherein the amount of reinforcing fibers and/or filler is varied in axial direction of the pipe during introducing of the the reinforcing fibers and/or filler by varying the position of the feeding means in axial direction.

2. The centrifugal casting method of Claim 1, characterized in that in the preparation a lug having a length of between 40 and 150 mm is formed in situ at both ends on the outer side of the pipe wall using a centrifugal casting mold in the interior of which at both ends thereof are disposed insert rings corresponding in size to that of the lugs and the amount of reinforcing fibers in the pipe wall is increased at both pipe ends in the area of the lugs and in the areas of the wall adjacent to the lugs in longitudinal direction.

3. The centrifugal casting method of Claim 2, characterized in that additional ring slots having a width of between 80 and 300 mm are formed in situ at one or more points throughout the pipe on the outer side thereof using a centrifugal casting mold on the inner side of which are disposed at one or several points insert rings corresponding in size to that of the slots and the amount of reinforcing fibers in the pipe wall is increased in the area of the slots and in the areas of the wall adjacent the slots in longitudinal direction.

4. The method of Claim 1, characterized in that an amount of reinforcing fiber is provided to the liquid resin in axial direction of the pipe at both end ranges of the pipe, which is higher than the amount at the middle range.

5. The method of Claims 2 or 3, characterized in that the pipe wall thickness at the lugs or slots is reduced by an amount of between one fifth and one third.

6. The method of Claims 2 or 3, characterized in that the lugs are formed of different depth at the two pipe ends.

7. The method of Claims 2 or 3,
characterized in that the lugs of identical depth are formed at both pipe ends and a slot deeper or flatter than the lugs at the pipe ends is formed halfway of the length of the pipe.

8. The method of Claims 2 or 3, characterized in that the pipe ends are provided with lugs of different depth and slots are formed at two or four points throughout the pipe the depth of which is greater or smaller than the depth of the lugs at the closer pipe end, and a flat slot, in the longitudinal direction, is followed by a deep slot or deep slot is followed by a flat slot, with the depth of each flat slot corresponding to the flatter of the lugs at the pipe end and the depth of each deep slot corresponding to the depth of the deeper of the lugs at the pipe end, and respectively all deep slots and lugs and respectively all flat slots and lugs corresponding in depth.

9. The method of Claims 2 or 3, characterized in that the lugs of the same depth are formed at the pipe ends and slots are formed at three or six points throughout the pipe, with the depth thereof being greater or smaller than the depth of the lugs at the pipe ends and with the depth of the slots adjacent the pipe ends differing from the depth of the lugs of the pipe ends, and a flat slot, in the longitudinal direction, being followed by a deep slot or a deep slot being followed by a flat slot, and with the depth of each flat slot corresponding to the depth of a flat lug at the pipe end or the depth of each deep slot corresponding to the depth of a deep lug at the pipe end, and respectively all deep slots and lugs and respectively all flat slots and lugs corresponding in depth.

10. The method of Claim 1, characterized in that the introduction of reinforcing fibers and/or filler is provided step by step and the next introduction is provided once the fibers and/or filler introduced by the previous step are distributed essentially uniformly and homogeneously within the resin in radial direction of the mold.

11. The method of Claim 1, characterized in that the amount of reinforcing fibers and/or filler is varied in the separate steps, that a non-uniform distribution of the reinforcing fibers and/or filler results in radial direction.

12. The method of Claim 1, characterized in that the used resin is a curable resin, e. g. a vinylester resin or an unsaturated polyester resin, an epoxy resin, a polyester amide resin or a compatible mixture thereof, and the curing of the resin is provided by regulated supply of heat in that the peak curing temperature is 120°C or less.

13. The method of Claims 1 to 12, characterized in that chopped glass fibers having a diameter of from 1 to 100 micrometers, a length of from 5 to 200 mm are used as reinforcing fibers and sand and/or other fillers are used as filler.

**Revendications**

1. Procédé de coulée centrifuge pour fabriquer des tuyaux en plastique renforcés par des fibres, tuyaux dont la paroi contient des fibres de renforcement et des charges particulières, dans lequel procédé on introduit la résine liquide, les fibres de renforcement et les charges dans un moule en rotation, puis on fait durcir la résine et on démoule le tuyau, caractérisé en ce qu'on introduit initialement dans le moule en rotation la totalité, ou au moins une fraction importante, de la résine et on la répartit sur la surface interne du moule et ensuite on répartit les fibres de renforcement et/ou la charge dans la résine suivant un ordre désiré, en faisant varier la quantité de fibres de renforcement et/ou de charge dans le sens axial du tuyau, pendant l'introduction des fibres de renforcement et/ou de la charge, en modifiant la position des moyens d'introduction dans le sens axial.

2. Procédé de coulée centrifuge selon la revendication 1, caractérisé en ce que, au cours de la fabrication, des embouts ayant une longueur comprise entre 40 et 150 mm sont formés in situ aux deux extrémités sur le côté extérieur de la paroi du tuyau, grâce a l'emploi d'un moule de coulée centrifuge à l'intérieur duquel sont disposées, aux deux extrémités, des bagues rapportées dont les dimensions correspondent à celles des embouts et en ce qu'on augmente la quantité de fibres de renforcement dans la paroi du tuyau aux deux extrémités du tuyau, dans la zone des embouts, et dans les zones de la paroi voisines des embouts dans le sens longitudinal.

3. Procédé de coulée centrifuge selon la revendication 2, caractérisé en ce qu'on forme in situ des gorges annulaires supplémentaires ayant une largeur comprise entre 80 et 300 mm, en un ou plusieurs point(s) tout le long du tuyau sur son côté extérieur, grâce à l'emploi d'un moule de coulée centrifuge sur la face interne duquel sont disposées, en un ou plusieurs point(s), des bagues rapportées dont les dimensions correspondent à celles des gorges, et en ce qu'on augmente la quantité de fibres de renforcement dans la paroi du tuyau dans la zone des gorges et dans les zones de la paroi voisines des gorges dans le sens longitudinal.

4. Procédé selon la revendication 1, caractérisé en ce qu'on fournit une certaine quantité de fibres de renforcement dans la résine liquide, dans le sens axial du tuyau, dans les deux parties terminales du tuyau, quantité qui est plus élevée que celle fournie dans la partie médiane.

5. Procédé selon la revendication 2 ou 3, caractérisé en ce que l'épaisseur de la paroi du tuyau, au niveau des embouts ou des gorges, est réduite d'une quantité comprise entre un cinquième et un tiers.

6. Procédé selon la revendication 2 ou 3, caractérisé en ce que les embouts sont formés avec des profondeurs différentes aux deux extrémités du tuyau.

7. Procédé selon la revendication 2 ou 3, caractérisé en ce qu'on forme des embouts de profondeur identique aux deux extrémités du tuyau et en ce qu'on forme une gorge plus ou moins profonde que les embouts des extrémités du tuyau, à mi-longueur de ce tuyau.

8. Procédé selon la revendication 2 ou 3, caractérisé en ce qu'on munit les extrémités du tuyau d'embouts de profondeurs différentes et en ce qu'on forme des gorges en deux ou en quatre points le long du tuyau, avec une profondeur plus grande ou plus petite que la profondeur de l'embout de l'extrémité du tuyau la plus proche, une gorge peu profonde étant suivie dans le sens longitudinal par une gorge propfonde ou bien une gorge profonde étant suivie par une gorge peu profonde, la profondeur de chaque gorge peu profonde correspondant à celle du moins profond des embouts des extrémités du tuyau et la profondeur de chaque gorge profonde correspondant à la profondeur du plus profond des embouts des extrémités du tuyau, et toutes les gorges profondes et tous les embouts profonds, ainsi que toutes les gorges peu profondes et les embouts peu profonds, respectivement, ayant des profondeurs correspondantes.

9. Procédé selon la revendication 2 ou 3, caractérisé en ce que des embouts de profondeur égale sont formés aux extrémités du tuyau et en ce que des gorges sont formées en trois ou six points le long du tuyau, leur profondeur étant plus grande ou plus petite que la profondeur des embouts des extrémités du tuyau, et la profondeur des gorges voisines des extrémités du tuyau étant différente de la profondeur des embouts des extrémités du tuyau, et une gorge peu profonde étant suivie, dans la direction longitudinale, d'une gorge profonde ou bien une gorge profonde étant suivie d'une gorge peu profonde, la profondeur de chaque gorge peu profonde correspondant à la profondeur d'un embout peu profond d'extrémité du tuyau ou bien la profondeur de chaque gorge profonde correspondant à la profondeur d'un embout profond d'extrémité du tuyau, et toutes les gorges profondes et les embouts profonds, ainsi que toutes les gorges peu profondes et les embouts peu profonds, respectivement, ayant des profondeurs correspondantes.

10. Procédé selon la revendication 1, caractérisé en ce que l'introduction des fibres de renforcement et/ou de la charge s'effectue par lots et en ce qu'on effectue l'introduction d'un lot une fois que les fibres et/ou la charge introduite dans le lot précèdent ont été réparties d'une façon pratiquement uniforme et homogène dans la résine, dans le sens radial du moule.

11. Procédé selon la revendication 1, caractérisé en ce qu'on fait varier la quantité de fibres de renforcement et/ou de charge dans les différents lots, et en ce qu'il en résulte une répartition non uniforme des fibres de renforcement et/ou de la charge dans la direction radiale.

12. Procédé selon la revendication 1, caractérisé en ce que la résine qu'on utilise est une résine durcissable, par exemple une résine d'ester vinylique ou une résine de polyester insaturé, une résine époxy, une résine de polyester-amide ou un mélange compatible de celles-ci, et on effectue le durcissement de la résine par un apport réglé de chaleur de façon que la température maximale pendant le durcissement soit de 120°C ou moins.

13. Procédé selon les revendications 1 à 12, caractérisé en ce qu'on utilise des fibres de verre hachées ayant un diamètre compris entre 1 et 100 um et une longueur de 5 à 200 mm, à titre de fibres de renforcement, et du sable et/ou d'autres charges, en quantité de charge.

## Patentansprüche

1. Schleudergußverfahren zum Herstellen von faserverstärkten Kunststoffrohren, deren Wand verstärkende Fasern und teilchenförmige Füllstoffe enthält, bei dem ein flüssiges Harz, verstärkende Fasern und Füllstoffe in eine sich drehende Form eingebracht werden, das Harz anschließend gehärtet und das Rohr aus der Form entnommen wird,
dadurch gekennzeichnet,
daß man die Gesamtmenge des Harzes oder zumindest einen wesentlichen Teil desselben anfänglich in die sich drehende Form einbringt und auf ihrer Innenoberfläche verteilt und anschließend verstärkende Fasern und/oder Füllstoffe in dem Harz in der gewünschten Reihenfolge verteilt, wobei die Menge an verstärkenden Fasern und/oder Füllstoff in axialer Richtung des Rohres während des Einbringens der verstärkenden Fasern und/oder Füllstoffe durch Verändern der Stellung der Zuführeinrichtung in axialer Richtung verändert wird.

2. Schleudergußverfahren nach Anspruch 1,
dadurch gekennzeichnet,
daß man zur in-situ-Herstellung eines zwischen 40 und 150 mm langen Absatzes auf der Außenseite der Rohrwand an beiden Enden eine Schleudergußform verwendet, in deren Inneren an beiden Enden Einsatzringe, die der Größe der Absätze entsprechen, angeordnet sind, und den Anteil von verstärkenden Fasern in der Rohrwand an beiden Rohrenden in Bereich der Absätze und in den den Absätzen in Längsrichtung benachbarten Bereichen erhöht.

3. Schleudergußverfahren nach Anspruch 2,
dadurch gekennzeichnet,
daß zusätzlich an einer oder mehreren Stellen längs des Rohres auf dessen Außenseite in-situ ausgebildete, 80 - 300 mm breite Ringnuten durch Verwendung einer Schleudergußform, in der auf der Innenseite an einer oder mehreren Stellen der Größe der Nuten entsprechende Einsatzringe angeordnet sind, ausgebildet werden, wobei man im Bereich der Nuten und den Nuten in Längsrichtung benachbarten Bereichen der Wand den Anteil an verstärkenden Fasern in der Rohrwand erhöht.

4. Verfahren nach Anspruch 1,
dadurch gekennzeichnet
daß man in axialer Richtung des Rohres im flüssigen Harz in beiden Endbereichen des Rohres einen höheren Anteil an verstärkenden Fasern anordnet als im mittleren Bereich.

5. Verfahren nach Ansprüchen 2 oder 3,
dadurch gekennzeichnet,
daß die Dicke der Rohrwand an den Absätzen oder Nuten um zwischen ein Fünftel und einem Drittel verringert ist.

6. Verfahren nach Ansprüchen 2 oder 3,
dadurch gekennzeichnet,
daß man Absätze mit unterschiedlicher Tiefe an beiden Rohrenden ausbildet.

7. Verfahren nach Ansprüchen 2 oder 3,
dadurch gekennzeichnet,
daß man an beiden Rohrenden Absätze gleicher Tiefe und auf der halben Länge des Rohres eine Nut ausbildet, die tiefer oder flacher ist als die Absätze an den Rohrenden.

8. Verfahren nach Ansprüchen 2 oder 3,
dadurch gekennzeichnet,
daß man an den Rohrenden Absätze mit unterschiedlicher Tiefe ausbildet und an zwei oder vier Stellen längs des Rohres Nuten ausbildet, deren Tiefe größer oder kleiner ist als die Tiefe der Absätze des nächstliegenden Rohrendes, und auf eine fläche Nut in Längsrichtung eine tiefe Nut folgt oder auf eine tiefe Nut eine flache Nut folgt, wobei die Tiefe jeder flachen Nut mit der Tiefe des flacheren Absatzes am Rohrende und die jeder tiefen Nut mit der Tiefe des tieferen Absatzes am Rohrende übereinstimmt und jeweils alle tiefen Nuten und Absätze und jweils alle flachen Nuten und Absätze in ihren Tiefen übereinstimmen.

9. Verfahren nach Ansprüchen 2 oder 3,
dadurch gekennzeichnet,
daß man an den Rohrenden Absätze gleicher Tiefe ausbildet und an drei oder sechs Stellen längs des Rohres Nuten ausbildet, deren Tiefe größer oder kleiner ist als die Tiefe der Absätze an den Rohrenden, und die Tiefe der den Rohrenden benachbarten Nuten von der Tiefe der Absätze an den Rohrenden abweicht und auf eine flache Nut in Längsrichtung eine tiefe Nut folgt oder auf eine tiefe Nut eine flache Nut folgt, wobei die Tiefe jeder flachen Nut mit der Tiefe eines flachen Absatzes am Rohrende oder die Tiefe jeder tiefen Nut mit der Tiefe eines tiefen Absatzes am Rohrende übereinstimmt und jeweils alle tiefen Nuten und Absätze und jeweils alle flachen Nuten und Absätze in ihren Tiefen übereinstimmen.

10. Verfahren nach Anspruch 1,
dadurch gekennzeichnet,
daß das Einbringen von verstärkenden Fasern und/oder Füllstoff schrittweise erfolgt und das nächste Einbringen erst erfolgt, nachdem die im vorhergehenden Schritt eingebrachten Fasern und/oder Füllstoffe im wesentlichen gleichmäßig und homogen in dem Harz in radialer Richtung der Form verteilt sind.

11. Verfahren nach Einspruch 1,
dadurch gekennzeichnet
daß man die Mengen von verstärkenden Fasern und/oder Füllstoffen bei den einzelnen Schritten variiert, daß in radialer Richtung eine ungleichmäßige Verteilung der verstärkenden Fasern und/oder Füllstoffe resultiert.

12. Verfahren nach Anspruch 1,
dadurch gekennzeichnet,
daß man als Harz ein härtbares Harz verwendet, z. B. ein Vinylesterharz oder ein ungesättigtes Polyesterharz, ein Epoxyharz, ein Polyesteramidharz oder eine verträgliche Mischung derselben, und die Härtung des Harzes durch dosiertes Einbringen von Wärme so ausgeführt wird, daß die maximale Härtungstemperatur 120°C oder weniger beträgt.

13. Verfahren nach Ansprüchen 1 - 12,
dadurch gekennzeichnet,
daß man als verstärkende Fasern Glasstapelfasern mit einem Durchmesser von 1 - 100 μm, einer Länge von 5 - 200 mm und als Füllstoff Sand und/oder andere Füllstoffe verwendet.

Figure 1

Figure 2

Figure 3

Figure 4

Figure 5

Figure 6

Figure 7